(19) Europäisches Patentamt
European Patent Office
Office européen des brevets

(11) **EP 3 406 646 B2**

(12) **NEW EUROPEAN PATENT SPECIFICATION**
After opposition procedure

(45) Date of publication and mention
of the opposition decision:
**25.12.2024   Bulletin 2024/52**

(45) Mention of the grant of the patent:
**10.11.2021   Bulletin 2021/45**

(21) Application number: **17848103.2**

(22) Date of filing: **04.09.2017**

(51) International Patent Classification (IPC):
*C08G 63/183* [(2006.01)]   *C08G 63/58* [(2006.01)]
*C08G 63/52* [(2006.01)]   *C08G 63/85* [(2006.01)]
*C08G 63/181* [(2006.01)]   *C08G 63/78* [(2006.01)]

(52) Cooperative Patent Classification (CPC):
**C08G 63/85; C08G 63/181; C08G 63/52; C08G 63/78**

(86) International application number:
**PCT/CN2017/100369**

(87) International publication number:
**WO 2018/045930 (15.03.2018 Gazette 2018/11)**

(54) **PRODUCTION PROCESS FOR A POLYESTER RESIN**

VERFAHREN ZUR HERSTELLUNG EINES POLYESTERHARZES

PROCÉDÉ DE PRÉPARATION D'UNE RÉSINE POLYESTER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.09.2016  CN 201610813867**

(43) Date of publication of application:
**28.11.2018   Bulletin 2018/48**

(73) Proprietors:
• **Zhuhai Wango Chemical Co., Ltd.
Zhuhai, Guangdong 519050 (CN)**
• **Kingfa Sci. & Tech. Co., Ltd.
Guangzhou, Guangdong 510663 (CN)**
• **Shanghai Kingfa Sci.&Tech.Co., Ltd.
Shanghai 201714 (CN)**

(72) Inventors:
• **WANG, Weiwei
Guangzhou
Guangdong 510663 (CN)**
• **YUAN, Zhimin
Guangzhou
Guangdong 510663 (CN)**
• **CAI, Tongmin
Guangzhou
Guangdong 510663 (CN)**
• **HUANG, Xianbo
Guangzhou
Guangdong 510663 (CN)**
• **ZENG, Xiangbin
Guangzhou
Guangdong 510663 (CN)**
• **RUAN, Renxu
Guangzhou
Guangdong 510663 (CN)**
• **GUO, Zhilong
Guangzhou
Guangdong 510663 (CN)**
• **TANG, Meijun
Guangzhou
Guangdong 510663 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
EP-A1- 2 881 415       CN-A- 103 044 665
CN-A- 103 819 662      CN-A- 104 725 616
CN-A- 105 237 750      CN-A- 105 566 616
CN-A- 106 397 746      CN-A- 106 397 747
CN-A- 106 397 748

EP 3 406 646 B2

**Description**

**TECHNICAL FIELD**

The present invention belongs to the field of macromolecular synthesis, and specifically, relates to a preparation method of a polyester resin.

**BACKGROUND**

Polyester resin is a macromolecular compound formed by diols or diacids or polyols and polyacids via condensation polymerization. The polyester resin has a high tenacity and a high-temperature resistance due to its flexible aliphatic chain and rigid aromatic chain, and meanwhile the polyester resin is enabled to have a biodegradable property owing to the presence of ester bond, being one of the degradable materials that are very active and have the best market application in current research of biodegradable plastics.

EP 2 881 415 A1 -discloses a method of preparation for a biodegradable co-polyester. This method including: forming an oligomer through a primary esterification reaction between a hydroxy group of an aliphatic dihydroxy compound and a carboxylic group of an aliphatic dicarboxylic acid compound; performing a secondary esterification reaction between the formed oligomer and an aromatic dicarboxylic acid compound; and performing a polycondensation reaction in a vacuum, in which sequentially divided addition of the aromatic dicarboxylic acid compound is performed and the weight ratio of the aromatic dicarboxylic acid compound with respect to the oligomer for each time of the sequentially divided addition is from 2:8 to 5:5. The method efficiently increases a solubility of aromatic dicarboxylic acid, thereby increasing a reaction rate and reducing a side reaction.

However, the polyester resin also has following drawbacks: when the polyester resin is made into a film material, the application of the film material will be affected since the film material has a relatively poor moisture-penetrability. At present, the moisture-penetrability of the film material is usually adjusted with a thickness of the film, such as a PE film. However, such adjustment has a certain drawback that material waste will be easily caused if it is too thick and mechanical properties of the material may be sacrificed if it is too thin.

The present invention has discovered by research that, when the polyester resin has a structure of $S_{\delta\ \text{hydrogen on conjugated carbon chain}}/S_{\delta\ \text{hydrogen on saturated carbon chain } 1.2-2.4}$ within a certain range, the polyester resin exhibits a relatively good moisture-penetrability due to an effective control of a sequence length and a sequence randomness of a repeat unit in the molecular chain.

**SUMMARY OF THE INVENTION**

A primary object of the present invention is to provide a method for making a polyester resin. The polyester resin has $S_{\delta\ \text{hydrogen on conjugated carbon chain}}/S_{\delta\ \text{hydrogen on saturated carbon chain } 1.2-2.4}$ within a certain range, and has a significantly improved moisture-penetrability.

The present invention is accomplished by the following technical solution:

A preparation method of a polyester resin, wherein a diol which constitutes a primary repeat unit of the polyester is 1,4-butanediol, and a diacid which constitutes the primary repeat unit of the polyester is a mixture of a conjugated dicarboxylic acid and a non-conjugated dicarboxylic acid, wherein the non-conjugated dicarboxylic acid is adipic acid or sebacic acid, and the conjugated dicarboxylic acid is terephthalic acid, 1,4-phenylenediacetic acid, 2,5-furandicarboxylic acid or 1,3-butadiene-1,4-dicarboxylic acid, and a structure of the polyester resin satisfies a relation as follows:

- $S_{\delta\ \text{hydrogen on conjugated carbon chain}}/S_{\delta\ \text{hydrogen on saturated carbon chain } 1.2-2.4} = 0.1$ to 0.35;
- wherein said $S_{\delta\ \text{hydrogen on conjugated carbon chain}}$ is a total area of a peak integration of hydrogen on a conjugated carbon chain in a $^1H$ NMR spectra, and $S_{\delta\ \text{hydrogen on saturated carbon chain } 12-2.4}$ is a total area of a peak integration of hydrogen on a saturated carbon chain and with a chemical shift between 1.2-2.4 ppm in the $^1H$ NMR spectra.

the method comprising following steps:

- (1) under an atmosphere of high purity nitrogen, putting a metric non-conjugated dicarboxylic acid and 1,4-butanediol into a reactor, increasing a temperature to 160-180°C for reacting for 20-40 minutes;
- (2) putting a conjugated dicarboxylic acid into the reactor, adding tetra-(2-ethylhexyl)titanate, increasing the temperature to 200-220°C for reacting for 1-2 hours, wherein an addition amount of the conjugated dicarboxylic acid accounts for 40-60 wt% of a total amount of the conjugated dicarboxylic acid, and an addition amount of tetra-(2-ethylhexyl)titanate accounts for 20-30 wt% of a total amount of tetra-(2-ethylhexyl)titanate;
- (3) putting the rest of the conjugated dicarboxylic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours; and

- (4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the polyester resin.

A ratio of $S_{\delta\ hydrogen\ on\ conjugated\ carbon\ chain}/S_{\delta\ hydrogen\ on\ saturated\ carbon\ chain\ 1.2\text{-}2.4}$ refers to a relation of an amount of substance of hydrogen on a conjugated carbon chain and hydrogen on a saturated carbon chain and with a chemical shift between 1.2-2.4 ppm in a molecular structure, which reflects a sequence length and a sequence randomness of a repeat unit in the molecular chain of polyester. There are many factors affecting the ratio of $S_{\delta\ hydrogen\ on\ conjugated\ carbon\ chain}/S_{\delta\ hydrogen\ on\ saturated\ carbon\ chain\ 1.2\text{-}2.4}$. For example, various factors such as differences in structure or proportion of raw material monomers, a degree of monomer self-polymerization, changes of a molecular weight and a sequence structure of the molecular chain, molecular chain segment being uniform or not, a degree of entanglement or branching of the molecular chain, the sequence length and the sequence randomness of the repeat unit in the macromolecular chain, molecular orientation arrangement and a crystal structure and preparation process (e.g. differences in catalysts), etc. will all affect the polyester eventually prepared to have a large difference in molecular chain structure, and thereby lead to a significant difference in the ratio of $S_{\delta\ hydrogen\ on\ conjugated\ carbon\ chain}/S_{\delta\ hydrogen\ on\ saturated\ carbon\ chain\ 1.2\text{-}2.4}$.

The present invention has discovered by research that, when the polyester resin has $S_{\delta\ hydrogen\ on\ conjugated\ carbon\ chain}/S_{\delta\ hydrogen\ on\ saturated\ carbon\ chain\ 1.2\text{-}2.4}$ = 0.1 to 0.35, a ratio of the amount of substance of hydrogen on a conjugated carbon chain and hydrogen on a saturated carbon chain and with a chemical shift between 1.2-2.4 ppm in a molecular structure is suitable. Since a sequence length and a sequence randomness of the repeat unit in the macromolecular chain are effectively controlled, when the polyester resin is made into a thin film with a thickness of $25\pm1\ \mu m$, a water vapor transmission thereof is 100-1500 g/m²/d, thereby making the film material show a relatively good moisture-penetrability. When $S_{\delta\ hydrogen\ on\ conjugated\ carbon\ chain}/S_{\delta\ hydrogen\ on\ saturated\ carbon\ chain\ 1.2\text{-}2.4}$ is lower than 0.1, the hydrogen on saturated carbon chain and with the chemical shift between 1.2-2.4 ppm has a relatively high amount of substance, and an excessive water vapor transmission, which is unfavorable to the development of a packaged product having undue moisture proof requirements, and is also unfavorable to the development of a product, such as an agricultural mulching film having undue water retention performance requirements. When $S_{\delta\ hydrogen\ on\ conjugated\ carbon\ chain}/S_{\delta\ hydrogen\ on\ saturated\ carbon\ chain\ 1.2\text{-}2.4}$ is higher than 0.35, the hydrogen on conjugated carbon chain in the molecular structure has a relatively high amount of substance, and a too low water vapor transmission, which is unfavorable to the development of a film material for food preservation.

Preferably, the structure of the polyester resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.15\ to\ 0.3.$$

More preferably, the structure of the polyester resin satisfies a relation:

$$S_{\delta\ hydrogen\ on\ conjugated\ carbon\ chain}/S_{\delta}\ hydrogen\ on\ saturated\ carbon_{\ chain\ 1.2\text{-}2.4} = 0.17\ to\ 0.28.$$

Most preferably, the structure of the polyester resin satisfies a relation:

$$S_{\delta\ hydrogen\ on\ conjugated\ carbon\ chain}/S_{\delta\ hydrogen\ on\ saturated\ carbon\ chain\ 1.2\text{-}2.4} = 0.18\ to\ 0.22.$$

Preferably, a carboxyl group content in the polyester resin is 50 moles per ton or less, preferably 30 moles per ton or less, and most preferably 25 moles per ton or less. When the carboxyl group content is relatively high, a water resistance of the polyester resin becomes worse during preserving or processing, making a product quality have a tendency to become worse. When the carboxyl group content is too low, a process route becomes complicated, an equipment input is too high, and it is economically unfavorable.

Preferably, based on a total mass of the whole polyester resin, a water content in the polyester resin is 1-1000 ppm. With respect to the polyester, by mass, there is no particular limitation on the lower limit of the water content, but it is usually 1 ppm or more, preferably 10 ppm-900 ppm, and most preferably 50 ppm-800 ppm. When the water content is too little, the process route becomes complicated, a drying time is also too long, it is economically unfavorable, and it may have a negative impact on color and other varieties. On the other hand, when the water content is too high, the polyester resin will be hydrolyzed during preservation, which makes the product quality have a tendency to become worse.

The polyester resin prepared by the method of the present invention is poly(terephthalate-co-adipate), poly(terephthalate-co-sebacate), poly(p-phenylenediacetate-co-adipate), poly(2,5-furandicarboxylate-co-adipate), poly(2,5-furandicarboxylate-co-sebacate), poly(1,3-butadiene-1,4-dicarboxylate-co-adipate), poly(1,3-butadiene-1,4-dicarboxylate-co-sebacate), poly(terephthalate-co-2,5-furandicarboxylate-co-adipate-co-sebacate), poly(terephthalate-co-2,5-furandicarboxylate-co-adipate), poly(terephthalate-co-1,3-butadiene-1,4-dicarboxylate-co-sebacate), poly(terephthalate-co-p-phenylenediacetate-co-adipate), poly(p-phenylenediacetate-co-2,5-furandicarboxylate-co-adipate), or poly(1,3-butadiene-1,4-dicarboxylate-co-2,5-furandicarboxylate-co-adipate-sebacate).

When the polyester resin prepared by the method of the present invention is made into a thin film with a thickness of $25 \pm 1$ μm, a water vapor transmission thereof is 100-1500 $g/m^2/d$, preferably 150-1200 $g/m^2/d$, more preferably 180-1000 $g/m^2/d$, and most preferably 200-900 $g/m^2/d$.

The present invention provides a preparation method of the above-described polyester resin, which comprises following steps:

- (1) under an atmosphere of high purity nitrogen, putting a metric non-conjugated dicarboxylic acid and 1,4-butanediol into a reactor, increasing a temperature to 160-180°C for reacting for 20-40 minutes;
- (2) putting a conjugated dicarboxylic acid into the reactor, adding tetra-(2-ethylhexyl)titanate, increasing the temperature to 200-220°C for reacting for 1-2 hours, wherein an addition amount of the conjugated dicarboxylic acid accounts for 40-60 wt% of a total amount of the conjugated dicarboxylic acid, and an addition amount of tetra-(2-ethylhexyl)titanate accounts for 20-30 wt% of a total amount of tetra-(2-ethylhexyl)titanate;
- (3) putting the rest of the conjugated dicarboxylic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours; and
- (4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the polyester resin.

The non-conjugated dicarboxylic acid in step (1) is succinic acid, adipic acid or sebacic acid.

The conjugated dicarboxylic acid in steps (2) and (3) is terephthalic acid, 1,4-phenylenediacetic acid, 2,5-furandicarboxylic acid or 1,3-butadiene-1,4-dicarboxylic acid.

Compared with the prior art, the present invention has following beneficial effects:

the present invention has discovered by research that, the structure of the polyester resin obtained by the method of the present invention satisfies a relation: $S_{\delta \text{ hydrogen on conjugated carbon chain}} / S_{\delta \text{ hydrogen on saturated carbon chain } 1.2\text{-}2.4} = 0.1$ to 0.35. Since a sequence length and a sequence randomness of a repeat unit in the macromolecular chain are effectively controlled, when the polyester resin is made into a thin film with a thickness of $25 \pm 1$ μm, a water vapor transmission thereof is 100-1500 $g/m^2/d$, making the prepared polyester resin show a relatively good moisture-penetrability.

**DETAILED DESCRIPTION OF THE PREFERED EMBODIMENT**

The present invention is further described below by specific embodiments. The following examples are preferred examples of the present invention, but the embodiments of the present invention are not limited by the following examples.

**Examples 1-15: synthesis of a polyester resin:**

under an atmosphere of high purity nitrogen, a metric non-conjugated dicarboxylic acid and 1,4-butanediol were put into a reactor, a temperature was increased to 160-180°C for reacting for 20-40 minutes; a conjugated dicarboxylic acid was put into the reactor, tetra-(2-ethylhexyl)titanate was added, the temperature was increased to 200-220°C for reacting for 1-2 hours, wherein an addition amount of the conjugated dicarboxylic acid accounted for 60 wt% of a total amount of the conjugated dicarboxylic acid, and an addition amount of tetra-(2-ethylhexyl)titanate accounted for 30 wt% of a total amount of tetra-(2-ethylhexyl)titanate; the rest 40 wt% of conjugated dicarboxylic acid was put into the reactor, tetra-(2-ethylhexyl)titanate that accounted for 30 wt% of the total amount of tetra-(2-ethylhexyl)titanate was added, the temperature was increased to 220-230°C for reacting for 2-3 hours; then the rest of tetra-(2-ethylhexyl)titanate was added, the reactor was vacuumized to have an internal pressure of 100 Pa or less in 2 hours, a reaction was carried out at 230-260°C for 2-4 hours, stirring was stopped, the reactor was filled with high purity nitrogen, and a resin was extruded from the reactor and was pelletized to obtain the polyester resin. Changing varieties and feeding amounts of the non-conjugated dicarboxylic acid and the conjugated dicarboxylic acid may achieve resins with different structures.

Example 1:

Parts of sebacic acid were 26.52, parts of 1,4-butanediol were 42.71, parts of terephthalic acid were 30.71, and parts of tetra-(2-ethylhexyl)titanate were 0.06.

Example 2:

Parts of sebacic acid were 30.27, parts of 1,4-butanediol were 42.41, parts of terephthalic acid were 27.26, and parts of tetra-(2-ethylhexyl)titanate were 0.06.

Example 3:

Parts of sebacic acid were 21.86, parts of 1,4-butanediol were 43.08, parts of terephthalic acid were 35.00, and parts of tetra-(2-ethylhexyl)titanate were 0.06.

Example 4:

Parts of sebacic acid were 30.85, parts of 1,4-butanediol were 42.6, parts of terephthalic acid were 26.49, and parts of tetra-(2-ethylhexyl)titanate were 0.06.

Example 5:

Parts of sebacic acid were 20.55, parts of 1,4-butanediol were 43.19, parts of terephthalic acid were 36.2, and parts of tetra-(2-ethylhexyl)titanate were 0.06.

Example 6:

Parts of sebacic acid were 33.55, parts of 1,4-butanediol were 42.15, parts of terephthalic acid were 24.24, and parts of tetra-(2-ethylhexyl)titanate were 0.06.

Example 7:

Parts of sebacic acid were 17.54, parts of 1,4-butanediol were 43.43, parts of terephthalic acid were 38.97, and parts of tetra-(2-ethylhexyl)titanate were 0.06.

Example 8:

Parts of sebacic acid were 39.88, parts of 1,4-butanediol were 41.64, parts of terephthalic acid were 18.42, and parts of tetra-(2-ethylhexyl)titanate were 0.06.

Example 9:

Parts of sebacic acid were 13.03, parts of 1,4-butanediol were 44.83, parts of 2,5-furandicarboxylic acid were 19.32, parts of adipic acid were 7.67, parts of terephthalic acid were 15.09, and parts of tetra-(2-ethylhexyl)titanate were 0.06.

Example 10:

Parts of adipic acid were 29.83, parts of 1,4-butanediol were 45.84, parts of terephthalic acid were 11.51, parts of 1,4-phenylenediacetic acid were 12.76, and parts of tetra-(2-ethylhexyl)titanate were 0.06.

Example 11:

Parts of adipic acid were 16.12, parts of 1,4-butanediol were 45.36, parts of 2,5-furandicarboxylic acid were 21.63, parts of 1,4-phenylenediacetic acid were 16.83, and parts of tetra-(2-ethylhexyl)titanate were 0.06.

Example 12:

Parts of sebacic acid were 10.79, parts of 1,4-butanediol were 46.13, parts of 1,3-butadiene-1,4-dicarboxylic acid were 16.27, parts of adipic acid were 4.56, parts of 2,5-furandicarboxylic acid were 22.19, and parts of tetra-(2-ethylhexyl) titanate were 0.06.

Example 13:

Parts of adipic acid were 27.71, parts of 1,4-butanediol were 46.98, parts of terephthalic acid were 9.96, parts of 2,5-furandicarboxylic acid were 15.29, and parts of tetra-(2-ethylhexyl)titanate were 0.06.

Example 14:

Parts of adipic acid were 9.52, parts of 1,4-butanediol were 46.02, parts of sebacic acid were 9.3, parts of terephthalic acid were 17.44, parts of 1,3-butadiene-1,4-dicarboxylic acid were 17.66, and parts of tetra-(2-ethylhexyl) titanate were 0.06.

Example 15:

Parts of sebacic acid were 40.54, parts of 1,4-butanediol were 42.20, parts of 1,3-butadiene-1,4-dicarboxylic acid were 8.08, parts of terephthalic acid were 9.12, and parts of tetra-(2-ethylhexyl)titanate were 0.06.

Comparative Example 1:

under an atmosphere of high purity nitrogen, metric sebacic acid and 1,4-butanediol were put into a reactor, a temperature was increased to 160-180°C for reacting for 20-40 minutes; terephthalic acid was put into the reactor, tetra-(2-ethylhexyl)titanate was added, the temperature was increased to 200-220°C for reacting for 1-2 hours, then the temperature was increased to 220-230°C for reacting for 2-3 hours; then the reactor was vacuumized to have an internal pressure of 100 Pa or less in 2 hours, a reaction was carried out at 230-260°C for 2-4 hours, stirring was stopped, the reactor was filled with high purity nitrogen, and a resin was extruded from the reactor and was pelletized to obtain a polyester resin.

Wherein, parts of sebacic acid were 17.54, parts of 1,4-butanediol were 43.43, parts of terephthalic acid were 38.97, and parts of tetra-(2-ethylhexyl)titanate were 0.06.

Comparative Example 2:

Parts of sebacic acid were 39.88, parts of 1,4-butanediol were 41.64, parts of terephthalic acid were 18.42, and parts of tetra-(2-ethylhexyl)titanate were 0.06. The preparation technology was the same as Comparative Example 1.

Comparative Example 3:

Wherein, parts of adipic acid were 9.52, parts of 1,4-butanediol were 46.02, parts of sebacic acid were 9.3, parts of terephthalic acid were 17.44, parts of 1,3-butadiene-1,4-dicarboxylic acid were 17.66, and parts of tetra-(2-ethylhexyl) titanate were 0.06. The preparation technology was the same as Comparative Example 1.

Comparative Example 4:

Parts of sebacic acid were 40.54, parts of 1,4-butanediol were 42.20, parts of 1,3-butadiene-1,4-dicarboxylic acid were 8.08, parts of terephthalic acid were 9.12, and parts of tetra-(2-ethylhexyl)titanate were 0.06. The preparation technology was the same as Comparative Example 1.

**Testing method of $^1$H spectra**

$S_{\delta \text{ hydrogen on conjugated carbon chain}}$ is a total area of a peak integration of hydrogen on a conjugated carbon chain in a $^1$H NMR spectra, and $S_{\delta \text{ hydrogen on saturated carbon chain 1.2-2.4}}$ is a total area of a peak integration of hydrogen on a saturated carbon chain and with a chemical shift between 1.2-2.4 ppm in the $^1$H NMR spectra. In a nuclear magnetic testing, after dissolving a sample with chloroform-d, a test was carried out at room temperature of 25°C using a German Bruker DRX-400 nuclear magnetic resonance spectrometer.

**Testing method of water vapor transmission:** the polyester resin was made into a thin film of $25\pm1$ $\mu$m, and a water vapor transmission of a film material was tested using Test Dish Water Method under an environment at 40°C and with a relative humidity of 60% by ASTM E96 standard. Results of performance tests are shown as Table 1.

**Testing method of carboxyl group content:** a test was carried out according to regulations of a method A in GB/T14190-2008.

**Testing method of water content:** a test was carried out according to regulations of a method B in GB/T12006.2-2009.

Table 1. Results of performance tests of polyester resins of Examples 1-15 and Comparative Examples 1-4

| | carboxyl group content: mol/T | water content: ppm | $S_\delta$ hydrogen on conjugated carbon chain/$S_\delta$ hydrogen on saturated carbon chain $_{1.2\text{-}2.4}$ | water vapor transmission unit: g/m²/d |
|---|---|---|---|---|
| Example 1 | 18.3 | 230 | 0.22 | 250 |
| Example 2 | 19.6 | 360 | 0.18 | 850 |
| Example 3 | 23.4 | 780 | 0.28 | 190 |
| Example 4 | 24.9 | 420 | 0.17 | 1000 |
| Example 5 | 25.4 | 870 | 0.3 | 170 |
| Example 6 | 26.5 | 40 | 0.15 | 1150 |
| Example 7 | 42.6 | 960 | 0.35 | 120 |
| Example 8 | 48.3 | 920 | 0.1 | 1450 |
| Example 9 | 21.9 | 720 | 0.21 | 200 |
| Example 10 | 16.7 | 650 | 0.19 | 900 |
| Example 11 | 23.8 | 530 | 0.27 | 180 |
| Example 12 | 25.5 | 38 | 0.29 | 150 |
| Example 13 | 26.4 | 890 | 0.15 | 1200 |
| Example 14 | 30.3 | 910 | 0.34 | 100 |
| Example 15 | 45.6 | 980 | 0.11 | 1500 |
| Comparative Example 1 | 42.6 | 960 | 0.37 | 80 |
| Comparative Example 2 | 48.3 | 920 | 0.08 | 1700 |
| Comparative Example 3 | 30.3 | 910 | 0.36 | 75 |
| Comparative Example 4 | 45.6 | 980 | 0.09 | 1850 |

It may be seen from Examples 1-15 and Comparative Examples 1-4 in Table 1 that, a structure of the polyester resin satisfies a relation: $S_{\delta \text{ hydrogen on conjugated carbon chain}}/S_{\delta \text{ hydrogen on saturated carbon chain } 1.2\text{-}2.4}$ = 0.1 to 0.35. When the polyester resin is made into a thin film with a thickness of $25\pm1$ μm, a water vapor transmission thereof is 100-1500 g/m²/d. When a value of $S_{\delta \text{ hydrogen on conjugated carbon chain}}/S_{\delta \text{ hydrogen on saturated carbon chain } 1.2\text{-}2.4}$ is greater than 0.35 or less than 0.1, while the polyester resin is made into a thin film with a thickness of $25\pm1$ μm, its water vapor transmission is too low or too high, showing a relatively poor moisture-penetrability.

## Claims

1. A preparation method of a polyester resin, wherein a diol which constitutes a primary repeat unit of the polyester is 1,4-butanediol, and a diacid which constitutes the primary repeat unit of the polyester is a mixture of a conjugated dicarboxylic acid and a non-conjugated dicarboxylic acid, wherein the non-conjugated dicarboxylic acid is adipic acid or sebacic acid, and the conjugated dicarboxylic acid is terephthalic acid, 1,4-phenylenediacetic acid, 2,5-furandicarboxylic acid or 1,3-butadiene-1,4-dicarboxylic acid, wherein the structure of the polyester resin satisfies a relation as follows:

    $S_{\delta \text{ hydrogen on conjugated carbon chain}} / S_{\delta \text{ hydrogen on saturated carbon chain } 1.2\text{-}2.4}$ = 0.1 to 0.35;
    wherein said $S_{\delta \text{ hydrogen on conjugated carbon chain}}$ is a total area of a peak integration of hydrogen on a conjugated carbon chain in a $^1$H NMR spectra, and said $S_{\delta \text{ hydrogen on saturated carbon chain } 1.2\text{-}2.4}$ is a total area of a peak integration of hydrogen on a saturated carbon chain and with a chemical shift between 1.2-2.4 ppm in the $^1$H NMR spectra,

wherein a testing method of the $^1$H NMR spectra is: after dissolving a sample with chloroform-d and carrying out a test at room temperature of 25°C and

wherein the testing method of the $^1$H NMR spectra using a German Bruker DRX-400 nuclear magnetic resonance spectrometer,

**characterized in that**, the preparation method comprises following steps:

(1) under an atmosphere of high purity nitrogen, putting a metric non-conjugated dicarboxylic acid and 1,4-butanediol into a reactor, increasing a temperature to 160-180°C for reacting for 20-40 minutes;

(2) putting a conjugated dicarboxylic acid into the reactor, adding tetra-(2-ethylhexyl)titanate, increasing the temperature to 200-220°C for reacting for 1-2 hours, wherein an addition amount of the conjugated dicarboxylic acid accounts for 40-60 wt% of a total amount of the conjugated dicarboxylic acid, and an addition amount of tetra-(2-ethylhexyl)titanate accounts for 20-30 wt% of a total amount of tetra-(2-ethylhexyl)titanate;

(3) putting the rest of the conjugated dicarboxylic acid into the reactor, adding tetra-(2-ethylhexyl)titanate that accounts for 20-30 wt% of the total amount of tetra-(2-ethylhexyl)titanate, increasing the temperature to 220-230°C for reacting for 2-3 hours; and

(4) then adding the rest of tetra-(2-ethylhexyl)titanate, vacuumizing the reactor to have an internal pressure of 100 Pa or less in 2 hours, reacting at 230-260°C for 2-4 hours, stopping stirring, filling the reactor with high purity nitrogen, and extruding a resin from the reactor and pelletizing the resin to obtain the polyester resin.

2. The method according to claim 1, wherein the structure of the polyester resin satisfies a relation:

$S_{\delta\ \text{hydrogen on conjugated carbon chain}} / S_{\delta\ \text{hydrogen on saturated carbon chain 1.2-2.4}} = 0.15$ to $0.3$, preferably, the structure of the polyester resin satisfies a relation:

$S_{\delta\ \text{hydrogen on conjugated carbon chain}} / S_{\delta\ \text{hydrogen on saturated carbon chain 1.2-2.4}} = 0.17$ to $0.28$, and more preferably, the structure of the polyester resin satisfies a relation:

$S_{\delta\ \text{hydrogen on conjugated carbon chain}} / S_{\delta\ \text{hydrogen on saturated carbon chain 1.2-2.4}} = 0.18$ to $0.22$.

3. The method according to any of claims 1 or 2, wherein a carboxyl group content in the polyester resin is 50 moles per ton or less, preferably 30 moles per ton or less, and more preferably 25 moles per ton or less, and a testing method of the carboxyl group content is carried out according to regulations of a method A in GB/T14190-2008.

4. The method according to any of claims 1 to 3, wherein based on a total mass of the polyester resin, a water content in the polyester resin is 1-1000 ppm, preferably 10 ppm-900 ppm, and more preferably 50 ppm-800 ppm, and a testing method of the water content is carried out according to regulations of a method B in GB/T12006.2-2009.

5. The method according to any of claim 1, wherein the polyester resin is poly(terephthalate-co-adipate), poly(terephthalate-co-sebacate), poly(p-phenylenediacetate-co-adipate), poly(2,5-furandicarboxylate-co-adipate), poly(2,5-furandicarboxylate-co-sebacate), poly(1,3-butadiene-1,4-dicarboxylate-co-adipate), poly(1,3-butadiene-1,4-dicarboxylate-co-sebacate), poly(terephthalate-co-2,5-furandicarboxylate-co-adipate-co-sebacate), poly(terephthalate-co-2,5-furandicarboxylate-co-adipate), poly(terephthalate-co-1,3-butadiene-1,4-dicarboxylate-co-sebacate), poly(terephthalate-co-p-phenylenediacetate-co-adipate), poly(p-phenylenediacetate-co-2,5-furandicarboxylate-co-adipate), poly(1,3-butadiene-1,4-dicarboxylate-co-2,5-furandicarboxylate-co-adipate-sebacate).

6. The preparation method of the polyester resin according to claim 1, wherein the non-conjugated dicarboxylic acid in step (1) is succinic acid, adipic acid or sebacic acid.

7. The preparation method of the polyester resin according to claim 1, wherein the conjugated dicarboxylic acid in steps (2) and (3) is terephthalic acid, 1,4-phenylenediacetic acid, 2,5-furandicarboxylic acid or 1,3-butadiene-1,4-dicarboxylic acid.

## Patentansprüche

1. Zubereitungsverfahren für ein Polyesterharz, wobei ein Diol, welches eine primäre Wiederholungseinheit des Polyesters bildet, 1,4-Butandiol ist, und eine Disäure, welche die primäre Wiederholungseinheit des Polyesters bildet, ein Gemisch aus einer konjugierten Dicarbonsäure und einer nicht-konjugierten Dicarbonsäure ist, wobei die nicht-konjugierte Dicarbonsäure Adipinsäure oder Sebacinsäure ist und die konjugierte Dicarbonsäure Terephthalsäure, 1,4-Phenylendiessigsäure, 2,5-Furandicarbonsäure oder 1,3-Butadien-1,4-dicarbonsäure ist, wobei eine Struktur des Polyesterharzes eine Beziehung wie folgt erfüllt:

$$S_{\delta\ \text{Wasserstoff an konjugierter Kohlenstoffkette}} / S_{\delta\ \text{Wasserstoff an gesättigter Kohlenstoffkette 1.2-2.4}} = 0,1\ \text{bis}\ 0,35;$$

wobei das $S_{\delta\ \text{Wasserstoff an konjugierter Kohlenstoffkette}}$ eine gesamte Flache einer Spitzenintegration von Wasserstoff an einer konjugierten Kohlenstoffkette in einem $^1$H-NMR-Spektrum ist und das $S_{\delta\ \text{Wasserstoff an gesättigter Kohlenstoff-kette 1.2- 2.4}}$ eine gesamte Flache einer Spitzenintegration von Wasserstoff an einer gesättigten Kohlenstoffkette und mit einer chemischen Verschiebung zwischen 1,2-2,4 ppm im $^1$H-NMR-Spektrum ist,

wobei ein Prüfverfahren des $^1$H-NMR-Spektrums ist: nach Auflösen einer Probe mit Chloroform-d und Durchführen eines Versuchs bei Raumtemperatur von 25°C,

wobei das Prüfverfahren des $^1$H-NMR-Spektrums unter Verwendung eines deutschen Bruker DRX-400-Kernspinresonanzspektrometers durchgeführt wird,

**dadurch gekennzeichnet, dass** das Zubereitungsverfahren die folgenden Schritte umfasst:

(1) unter einer Atmosphäre aus hochreinem Stickstoff Einbringen von einer metrischen nicht-konjugierten Dicarbonsäure und 1,4-Butandiol in einen Reaktor, Erhöhen der Temperatur auf 160180 °C zum Reagieren für 20-40 Minuten;

(2) Einbringen einer konjugierten Dicarbonsäure in den Reaktor, Zugeben von Tetra-(2-ethylhexyl)titanat, Erhöhen der Temperatur auf 200-220 °C zum Reagieren für 1-2 Stunden, wobei eine Zugabemenge der konjugierten Dicarbonsäure 40-60 Gew.-% einer Gesamtmenge der konjugierten Dicarbonsäure ausmacht und eine Zugabemenge des Tetra-(2-ethylhexyl)titanats 20-30 Gew.-% einer Gesamtmenge des Tetra-(2-ethylhexyl)titanats ausmacht;

(3) Einbringen des Rests der konjugierten Dicarbonsäure in den Reaktor, Zugeben von Tetra-(2-ethylhexyl) titanat, das 20-30 Gew.-% der Gesamtmenge des Tetra-(2-ethylhexyl)titanats ausmacht, Erhöhen der Temperatur auf 220-230°C zum Reagieren für 2-3 Stunden; und

(4) anschließendes Zugeben des Rests des Tetra-(2-ethylhexyl)titanats, Vakuumieren des Reaktors auf einen Innendruck von 100 Pa oder weniger in 2 Stunden, Reagieren bei 230-260°C für 2-4 Stunden, Beenden des Rührens, Füllen des Reaktors mit hochreinem Stickstoff und Extrudieren eines Harzes aus dem Reaktor und Pelletieren des Harzes, um das Polyesterharz zu erhalten.

2. Verfahren nach Anspruch 1, wobei die Struktur des Polyesterharzes die Beziehung erfüllt:

$$S_{\delta\ \text{Wasserstoff an konjugierter Kohlenstoffkette}} / S_{\delta\ \text{Wasserstoff an gesättigter Kohlenstoffkette 1.2-2.4}} = 0,15\ \text{bis}\ 0,3,$$ wobei vorzugsweise die Struktur des Polyesterharzes die Beziehung erfüllt:

$$S_{\delta\ \text{Wasserstoff an konjugierter Kohlenstoffkette}} / S_{\delta\ \text{Wasserstoff an gesättigter Kohlenstoffkette 1.2-2.4}} = 0,17\ \text{bis}\ 0,28,$$ und wobei besonders bevorzugt die Struktur des Polyesterharzes die Beziehung erfüllt:

$$S_{\delta\ \text{Wasserstoff an konjugierter Kohlenstoffkette}} / S_{\delta\ \text{Wasserstoff an gesättigter Kohlenstoffkette 1.2-2.4}} = 0,18\ \text{bis}\ 0,22.$$

3. Verfahren nach einem beliebigen der Ansprüche 1 oder 2, wobei ein Carboxylgruppengehalt in dem Polyesterharz 50 mol pro Tonne oder weniger, bevorzugt 30 Mol pro Tonne oder weniger und besonders bevorzugt 25 Mol pro Tonne oder weniger beträgt und ein Prüfverfahren auf den Carboxylgruppengehalt gemäß den Vorschriften eines Verfahrens A in GB/T14190-2008 durchgeführt wird.

4. Verfahren nach einem beliebigen der Ansprüche 1 bis 3, wobei, bezogen auf eine Gesamtmasse des Polyesterharzes, ein Wassergehalt in dem Polyesterharz 1-1000 ppm, bevorzugt 10 ppm-900 ppm und besonders bevorzugt 50 ppm-800 ppm beträgt und ein Prüfverfahren auf den Wassergehalt gemäß den Vorschriften eines Verfahrens B in GB/T12006.2-2009 durchgeführt wird.

5. Verfahren nach Anspruch 1, wobei das Polyesterharz das folgende ist:
Poly(terephthalat-co-adipat), Poly(terephthalat-co-sebacat), Poly(p-phenylendiacetat-co-adipat), Poly(2,5-furandicarboxylat-co-adipat), Poly(2,5-furandicarboxylat-co-sebacat), Poly(1,3-butadien-1,4-dicarboxylat-co-adipat), Poly(1,3-butadien-1,4-dicarboxylat-co-sebacat), Poly(terephthalat-co-2,5-furandicarboxylat-co-adipat-co-sebacat), Poly(terephthalat-co-2,5-furandicarboxylat-co-adipat), Poly(terephthalat-co-1,3-butadien-1,4-dicarboxylat-co-sebacat), Poly(terephthalat-co-p-phenylendiacetat-co-adipat), Poly(p-phenylendiacetat-co-2,5-furandicarboxylat-co-adipat), Poly(1,3-butadien-1,4-dicarboxylat-co-2,5-furandicarboxylat-co-adipat-sebacat).

6. Zubereitungsverfahren für das Polyesterharz nach Anspruch 1, wobei die nicht-konjugierte Dicarbonsäure in Schritt (1) Bernsteinsäure, Adipinsäure oder Sebacinsäure ist.

7. Zubereitungsverfahren für das Polyesterharz nach Anspruch 1, wobei die konjugierte Dicarbonsäure in den Schritten (2) und (3) Terephthalsäure, 1,4-Phenylendiessigsäure, 2,5-Furandicarbonsäure oder 1,3-Butadien-1,4-dicarbonsäure ist.

**Revendications**

1. Procédé de préparation d'une résine polyester, dans lequel un diol qui constitue un motif répétitif primaire du polyester est le 1,4-butanediol, et un diacide qui constitue le motif répétitif primaire du polyester est un mélange d'un acide dicarboxylique conjugué et d'un acide dicarboxylique non conjugué, l'acide dicarboxylique non conjugué étant l'acide adipique ou l'acide sébacique, et l'acide dicarboxylique conjugué étant l'acide téréphtalique, l'acide 1,4-phénylènediacétique, l'acide 2,5-furane-dicarboxylique ou l'acide 1,3-butadiène-1,4-dicarboxylique, dans lequel une structure de la résine polyester satisfait à une relation comme suit :

$S_{\delta\ \text{hydrogène sur la chaîne carbonée conjuguée}}/S_{\delta\ \text{hydrogène sur la chaîne carbonée saturée 1.2-2.4}} = 0,1$ à $0,35$ ;

dans lequel ladite valeur $S_{\delta\ \text{hydrogène sur la chaîne carbonée conjuguée}}$ est une aire totale d'une intégration de pic d'hydrogène sur une chaîne carbonée conjuguée dans un spectre de RMN-$^1$H, et ladite valeur $S_{\delta\ \text{hydrogène sur la chaîne carbonée saturée 1.2-2.4}}$ est une aire totale d'une intégration de pic d'hydrogène sur une chaîne carbonée saturée et avec un déplacement chimique entre 1,2-2,4 ppm dans le spectre de RMN-$^1$H,

dans lequel une méthode d'essai du spectre de RMN-$^1$H est : après dissolution d'un échantillon avec du chloroforme-d et exécution d'un essai à la température ambiante de 25 °C et

dans lequel la méthode d'essai du spectre de RMN-$^1$H est effectuée en utilisant un spectromètre de résonance magnétique nucléaire allemand Bruker DRX-400,

**caractérisé en ce que** le procédé de préparation comprend les étapes suivantes consistant à :

(1) sous une atmosphère d'azote de grande pureté, introduire dans un réacteur un acide dicarboxylique non conjugué et du 1,4-butanediol métriques, élever une température jusqu'à 160-180°C pour faire réagir pendant 20-40 minutes ;

(2) introduire dans le réacteur un acide dicarboxylique conjugué, ajouter du titanate de tétra-(2-éthylhexyle), élever la température jusqu'à 200-220 °C pour faire réagir pendant 1-2 heures,

une quantité d'addition de l'acide dicarboxylique conjugué représentant 40-60 % en poids d'une quantité totale de l'acide dicarboxylique conjugué, et une quantité d'addition de titanate de tétra-(2-éthylhexyle) représentant 20-30 % en poids d'une quantité totale de titanate de tétra-(2-éthylhexyle) ;

(3) introduire dans le réacteur le reste de l'acide dicarboxylique conjugué, ajouter du titanate de tétra-(2-éthylhexyle) qui représente 20-30 % en poids de la quantité totale de titanate de tétra-(2-éthylhexyle), élever la température jusqu'à 220-230 °C pour faire réagir pendant 2-3 heures ; et

(4) ensuite ajouter le reste du titanate de tétra-(2-éthylhexyle), faire le vide dans le réacteur pour avoir une pression interne de 100 Pa ou moins en 2 heures, faire réagir à 230-260 °C pendant 2-4 heures, arrêter l'agitation, introduire dans le réacteur de l'azote de grande pureté, et extruder une résine à partir du réacteur et granuler la résine pour obtenir la résine polyester.

2. Procédé selon la revendication 1, dans lequel la structure de la résine polyester satisfait à une relation comme suit :
$S_{\delta\ \text{hydrogène sur la chaîne carbonée conjuguée}}/S_{\delta\ \text{hydrogène sur la chaîne carbonée saturée 1.2-2.4}} = 0,15$ à $0,3$ ; de préférence, la structure de la résine polyester satisfait à une relation comme suit :
$S_{\delta\ \text{hydrogène sur la chaîne carbonée conjuguée}}/S_{\delta\ \text{hydrogène sur la chaîne carbonée saturée 1.2-2.4}} = 0,17$ à $0,28$ ; de préférence encore, la structure de la résine polyester satisfait à une relation comme suit :
$S_{\delta\ \text{hydrogène sur la chaîne carbonée conjuguée}}/S_{\delta\ \text{hydrogène sur la chaîne carbonée saturée 1.2-2.4}} = 0,18$ à $0,22$.

3. Procédé selon l'une quelconque des revendications 1 ou 2, dans lequel une teneur en groupes carboxy de la résine polyester est de 50 moles par tonne ou moins, de préférence 30 moles par tonne ou moins, et de façon plus particulièrement préférée 25 moles par tonne ou moins, et un méthode d'analyse de la teneur en groupes carboxy est effectuée conformément aux directives d'une méthode A dans GB/T14190-2008.

4. Procédé selon l'une quelconque des revendications 1 à 3, dans lequel sur la base d'une masse totale de la résine polyester, une teneur en eau de la résine polyester est 1 - 1 000 ppm, de préférence 10 ppm-900 ppm, et de façon plus particulièrement préférée 50 ppm-800 ppm, et une méthode d'analyse de la teneur en eau est effectuée conformément aux directives d'une méthode B dans GB/T12006.2-2009.

5. Procédé selon la revendication 1, dans lequel la résine polyester est

le poly(téréphtalate-co-adipate), le poly(téréphtalate-co-sébaçate),
le poly(p-phénylènediacétate-co-adipate),
le poly(2,5-furanedicarboxylate-co-adipate),
le poly(2,5-furanedicarboxylate-co-sébaçate),
le poly(1,3-butadiène-1,4-dicarboxylate-co-adipate),
le poly(1,3-butadiène-1,4-dicarboxylate-co-sébaçate),
le poly(téréphtalate-co-2,5-furanedicarboxylate-co-adipate-co-sébaçate),
le poly(téréphtalate-co-2,5-furanedicarboxylate-co-adipate),
le poly(téréphtalate-co-1,3-butadiène-1,4-dicarboxylate-co-sébaçate),
le poly(téréphtalate-co-p-phénylène diacétate-co-adipate),
le poly(p-phénylène diacétate-co-2,5-furanedicarboxylate-co-adipate),
le poly(1,3-butadiène-1,4-dicarboxylate-co-2,5-furane-dicarboxylate-co-adipate-sébaçate).

6. Procédé de préparation de la résine polyester selon la revendication 1, dans lequel l'acide dicarboxylique non conjugué dans l'étape (1) est l'acide succinique, l'acide adipique ou l'acide sébacique.

7. Procédé de préparation de la résine polyester selon la revendication 1, dans lequel l'acide dicarboxylique conjugué dans les étapes (2) et (3) est l'acide téréphtalique, l'acide 1,4-phénylène-diacétique, l'acide 2,5-furanedicarboxylique ou l'acide 1,3-butadiène-1,4-dicarboxylique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2881415 A1